# EUROPEAN PATENT APPLICATION

(11) **EP 4 797 013 A1**
(43) Date of publication of application: **26.08.2026**
(21) Application number: 25159338.0
(22) Date of filing: 21.02.2025
(51) Int. Cl.: G05B 13/04

(54) **METHOD AND SYSTEM FOR GENERATING RECOMMENDATIONS FOR OPTIMIZING A PROCESS**

(71) Applicant: Innomotics GmbH, 90441 Nürnberg (DE)
(72) Inventor: NIRMAL, Abhinav, 400064 Mumbai, Maharashtra (IN); UPPILI, Umesh, 560069 Bangalore, Karnataka (IN); D, Aravind, 689101 Thiruvalla, Kerala (IN); SINGH, Himanshu Kumar, 560100 Bangalore (IN)
(74) Representative: Michalski Hüttermann & Partner mbB

(57) **Abstract**

A system for generating recommendations for optimizing a process in a cement kiln is disclosed. The system comprises a plurality of sensors, an apparatus for generating recommendations, and a controller. The plurality of sensors is configured to measure real-time operational parameters comprising control variables and critical parameters of the process in the cement kiln. The apparatus is configured to receive the historical data of operational parameters of the cement kiln, optimize the critical parameters of the cement kiln using Bayesian optimization to determine the optimum control variables, and recommend the determined optimum control variables to be set a future timestamp for optimizing the process. The controller is configured to set the optimum control variables at a future timestamp based on the recommendations of the apparatus to optimize the process in the cement kiln.

## Description

The present disclosure relates to optimizing processes, and more particularly relates to a method and system for generating recommendations for optimizing a process in process industry.

In process industries, optimizing various processes to enhance efficiency, reduce costs, and improve product quality is critical. Traditionally, process optimization has been approached through the use of physics-based models, which rely on first-principle equations to simulate and predict the behavior of the process. These models are developed based on a deep understanding of the underlying physical, chemical, and mechanical phenomena governing the processes. While effective in certain contexts, physics-based models have several inherent limitations, especially in industries where real-time optimization and adaptation are necessary.

One major drawback of physics-based models is their complexity and high computational power required for execution. Developing physics-based models for highly dynamic processes is a time-consuming task. For example, in a cement industry, the manufacturing process of cement involves complex physical and chemical reactions occurring inside a kiln. It is highly difficult to model all the processes that happen inside the kiln using first-principles equations. Further, these models are accurate for steady state, and they are less reliable for dynamic processes. As a result, these models may not provide optimal or reliable recommendations when the process operates in a dynamic environment with frequent fluctuations in operational parameters.

Thus, there is a need for a novel approach that addresses the limitations of traditional physics-based models to provide recommendations for optimizing processes in a process industry.

Therefore, it is an object of the invention to provide a method for generating recommendations for optimizing a process in process industry.

The term "forecasting model" refers to a mathematical, statistical, or computational framework designed to predict future outcomes based on historical data. Forecasting models may utilize patterns in existing data to project future trends, aiding in mitigating risks, or optimize performance. Forecasting models may include time series models such as ARIMA (Auto Regressive Integrated Moving Average), recurrent neural networks such as LSTM (Long short-term memory), and the like.

The term "control variables" refers to specific parameters that are regulated to ensure the stability and consistency of the process. These variables are critical for maintaining the desired output quality and performance, preventing deviations caused by uncontrolled fluctuations. For example, in chemical processing, temperature, pressure, and flow rate might be control variables regulated to maintain the ideal environment for a reaction.

The term "critical parameters" refer to measurable variables that are essential for evaluating the efficiency, quality, and overall success of that process. Critical parameters are often monitored in real-time and can trigger adjustments to the process if deviations occur. For example, in cement industry, critical parameters might include kiln temperature, kiln pressure, clinker quality so on and so forth.

The term "objective function" refers to an expression that defines the goal or target of optimization for a critical parameter of the process. It quantifies the desired critical parameter that needs to be maximized or minimized, depending on the process requirements. The objective function enables in optimizing the critical parameter such that the critical parameter is within the predefined maximum and minimum threshold. For example, in cement manufacturing process, the objective function might be to minimize production costs while maintaining a certain level of quality of the cement.

The method comprises acquiring, by a processing unit, historical data of operational parameters comprising control variables and critical parameters associated with the process for storing in a memory. Control variables are parameters that influences the course of the process. Control variables include but are not limited to pressure, temperature, fuel supply rate, raw material supply rate, and the like. Critical parameters are parameters that provides an information on the outcome of the process. As an example, critical parameters may include sintering zone temperature, power consumption, thermal efficiency of the kiln so on and so forth.

The method comprises selecting, by the processing unit, a forecasting model for forecasting critical parameters of the process. Each of the critical parameters are forecasted using a specific forecasting model that is selected among a plurality of forecasting models.

The step of selecting a forecasting model for forecasting critical parameters comprises identifying timestamps in the historical data in which the user has performed an action of changing the control variables of the process. The step further comprises forecasting, by a forecasting model, the critical parameters of the process before replicating the change in control variables made by the user. The step further comprises forecasting, by the forecasting model, the critical parameters of the process after replicating the change in control variables made by the user. The step further comprises comparing the forecasted critical parameters of the process before replicating the change in the control variables and after replicating the change in the control variables. The step further comprises selecting the forecasting model for forecasting critical parameters if a difference is observed between the forecasted critical parameters of the process before replicating the change in the control variables and after replicating the change in the control variables, and the forecasted critical parameters of the process after replicating the change in the control variables made by the user is in-line with real-time values of the critical parameters of the processes. Thus, a forecasting model is selected for each of the critical parameters.

In one embodiment, the forecasting model is selected from the group of hybrid neural networks, autoregressive models, ARIMA, and NARMAX.

The method comprises forecasting, using the forecasting model, critical parameters of the process by processing historical data of operational parameters associated with the process. The forecasting model utilizes data processing techniques to forecast the future critical parameters of the process for given operating conditions.

The method comprises defining, by the processing unit, an objective function for each of the critical parameters of the process, wherein the objective function is defined using forecasted values of the critical parameter, a maximum threshold and a minimum threshold of the critical parameter.

The objective functions of the critical parameters comprise a loss function for standard deviation of the forecasted critical parameters. The loss function ensures that the fluctuation in the forecasted critical parameters is minimal.

The maximum and minimum threshold for the critical parameters is determined by the processing unit using the historical data of operational parameters of the process.

The method comprises defining, by the processing unit, an optimization function for optimizing the process, wherein the optimization function is defined using objective functions of the critical parameters of the process and weights assigned to each of the objective functions.

The method comprises optimizing, by the processing unit using an optimization module, the critical parameters of the process by applying Bayesian optimization to the optimization function, such that the forecasted critical parameters are within the defined maximum threshold and minimum threshold.

The method comprises determining, by the processing unit, the optimum control variables to be set at a future timestamp for optimizing the critical parameters of the process within the maximum and minimum threshold.

The method comprises recommending, by the processing unit, to a user, the optimum control variables to be set between the current timestamp and a future timestamp to optimize the process.

The method comprises setting the control variables of the process based on the recommendations of the processing unit to optimize the process.

The method further comprises providing a change in control variables at a future timestamp as an input at the current timestamp to the forecasting model.

The method comprises forecasting, by the forecasting model, the critical parameters of the process for the change in control variables at the future timestamp.

The method comprises optimizing, by the processing unit, the critical parameters of the process by applying Bayesian optimization to the optimization function based on the forecasted critical parameters.

The method comprises determining, by the processing unit, optimum control variables to be set between the current timestamp and a future timestamp for optimizing the critical parameters of the process within the maximum and minimum threshold.

The method comprises recommending, by the processing unit, to the user, the optimum control variables to be set between the current timestamp and a future timestamp to optimize the process.

The method further comprises providing boundaries to the control variables of the process as an input to the optimization module.

The method comprises validating that the recommended optimum control variables are within the defined boundaries of the control variables.

The object of the present invention is achieved by an apparatus configured for generating recommendations for optimizing a process in process industry. The apparatus comprises one or more processing units, and a memory communicatively coupled to the one or more processing units. The memory comprises a module stored in the form of machine-readable instructions executable by the one or more processing units, wherein the module is configured to perform the method steps mentioned above.

The object of the present invention is achieved by a system for generating recommendations for optimizing a process in a cement kiln. The system comprises a plurality of sensors, an apparatus for generating recommendations, and a controller. The plurality of sensors is configured to measure real-time operational parameters comprising control variables and critical parameters of the process in the cement kiln, wherein the control variables include pressure, temperature, raw material flow rate, or fuel flow rate, and the critical parameters include sintering zone temperature. The apparatus is configured to receive the historical data of operational parameters of the cement kiln, optimize the critical parameters of the cement kiln using Bayesian optimization to determine the optimum control variables, and recommend the determined optimum control variables to be set a future timestamp for optimizing the process. The controller is configured to set the optimum control variables at a future timestamp based on the recommendations of the apparatus to optimize the process in the cement kiln.

The object of the present invention is achieved by a computer-program product, having computer-readable instructions stored therein, that when executed by a processing unit, cause the processing unit to perform the above-mentioned method steps.

The object of the present invention is achieved by a computer readable medium on which program code sections of a computer program are saved, the program code sections being loadable into and/or executable in a system to make the system execute the above method steps.

The present invention is further described hereinafter with reference to illustrated embodiments shown in the accompanying drawings, in which:
- FIG 1: illustrates a system for generating recommendations for optimizing a process in a cement kiln, according to an embodiment of the present invention;
- FIG 2: illustrates a block diagram of an apparatus for generating recommendations for optimizing a process, according to one embodiment of the present invention;
- FIG 3: is a flowchart of a method for generating recommendations for optimizing a process in process industry, according to an embodiment of the present invention;
- FIG 4: is a graphical representation of optimization of a critical parameter, according to an embodiment of the present invention;
- FIG 5: is a flowchart a method for selecting a forecasting model, according to an embodiment of the present invention;
- FIG 6: is a graphical representation of forecasting critical parameters by forecasting model, according to an embodiment of the present invention; and
- FIG 7: is a flowchart of a method for generating recommendations for optimizing a process in process industry, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

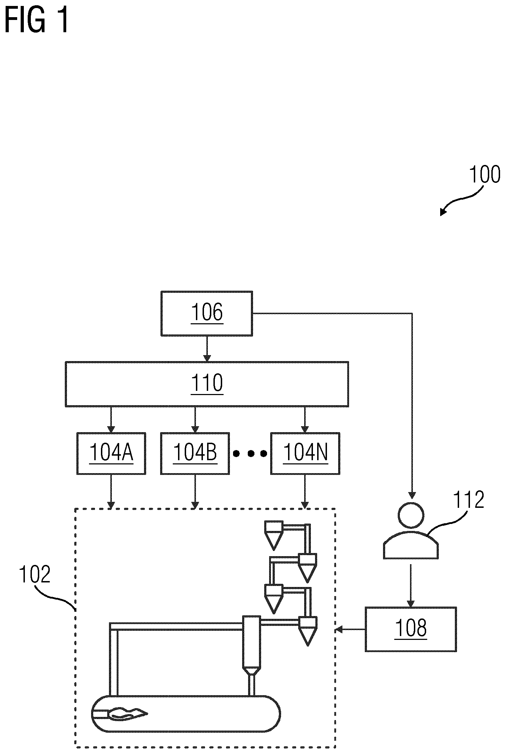

FIG. 1 illustrates a system 100 for generating recommendations for optimizing a process in a cement kiln 102, according to an embodiment of the present invention. The system 100 comprises a cement kiln 102, a plurality of sensors (104a-104n), a communication network 110, an apparatus 106, and a controller. Cement kiln 102 is a critical component in the manufacturing process of cement. The kiln operates at temperatures exceeding 1,400°C, enabling the thermal decomposition of calcium carbonate and the subsequent formation of calcium silicates.

The main reactions that take place inside the cement kiln 102 are:
a. Drying zone: The upper part of the kiln, where the water is removed from the slurry by the flow of hot gases. The temperatures in this zone are around 400 degrees Celsius.
b. Calcination zone: In this zone, the limestone present inside the slurry undergoes decomposition as follows:

   CaCO3→CaO+CO2

   Magnesium carbonate, which is found in some quantities with limestone deposits, also dissociates as

   MgCO3→MgO+CO2.

   However, the decomposition of dolomites and magnesium/dolomitic precursors is more complex than that of their pure compounds.

   CaCO3.MgCO3 + Heat → CaCO3.MgO + CO2

   CaCO3.MgO + Heat → CaO.MgO + CO2

   CaCO3.MgCO3 + Heat → CaO.MgO + CO2
c. Clinkering zone: The lower part of the kiln (1300-1700 degree Celsius). Various fusion reactions, yielding various products as follows:

   2CaO+SiO2→Ca2SiO4(C2S)

   3CaO+SiO2→Ca3SiO5(C3S)

   3CaO+Al2O3→Ca3Al2O6(C3A)

   4CaO+Al2O3+Fe2O3→Ca4Al2Fe2O10(C4AF)

For example, the sintering zone temperature in the kiln should be kept in a particular range to produce clinker with required physical and chemical characteristics. Therefore, the critical parameters in the kiln are to be maintained in a predefined range so that the output of the kiln meets the desired characteristics.

The sensors (104a-104n) are deployed in the cement kiln 102 to measure real-time operational parameters comprising control variables and critical parameters of the process in the cement kiln 102. The control variables include pressure, temperature, raw material flow rate, or fuel flow rate. The critical parameters include sintering zone temperature, cement quality, thermal efficiency or any other similar parameter.

The apparatus 106 is configured for generating recommendations for optimizing a process in the cement kiln 102. The apparatus 106 is configured to acquire historical data of operational parameters comprising control variables and critical parameters associated with the processes of cement kiln 102 for storing in a database 206. Further, the apparatus 106 is configured to select a forecasting model 210 for forecasting critical parameters of the process and the apparatus 106 forecasts critical parameters of the process by processing historical data of operational parameters associated with the process. The apparatus 106 is configured to define an objective function for each of the critical parameters of the process, wherein the objective function is defined using forecasted values of the critical parameter, a maximum threshold and a minimum threshold of the critical parameter. The apparatus 106 further defines an optimization function for optimizing the process, wherein the optimization function is defined using objective functions of the critical parameters of the process and weights assigned to each of the objective functions. The apparatus 106 optimizes the critical parameters of the process by applying Bayesian optimization to the optimization function, such that the forecasted critical parameters are within the defined maximum threshold and minimum threshold. The apparatus 106 then determines the optimum control variables to be set at a future timestamp for optimizing the critical parameters of the process within the maximum and minimum threshold. The apparatus 106 further recommends to a user 112, the optimum control variables to be set between the current timestamp and a future timestamp to optimize the process. Thus, control variables such as pressure, temperature are set based on the recommendations to optimize the process to ensure that the critical parameters such as sintering zone temperature are within the permissible threshold limits.

The user 112 may input the recommended optimum control variables to the controller which further alters the control variables to the recommended optimum control variables thereby controlling the process to optimize the efficiency of the cement kiln 102.

The communication network 110 may include, but are not limited to, any one or more different types of networks such as, for example, cable networks, public networks (e.g., the Internet), private networks (e.g., frame-relay networks), wireless networks, cellular networks, telephone networks (e.g., a public switched telephone network), cloud based networks, or any other suitable private or public packet switched or circuit switched networks. Such network(s) may have any suitable communication range associated therewith and may include, for example, global networks (e.g., the Internet), metropolitan area networks (MANs), wide area networks (WANs), local area networks (LANs), or personal area networks (PANs).

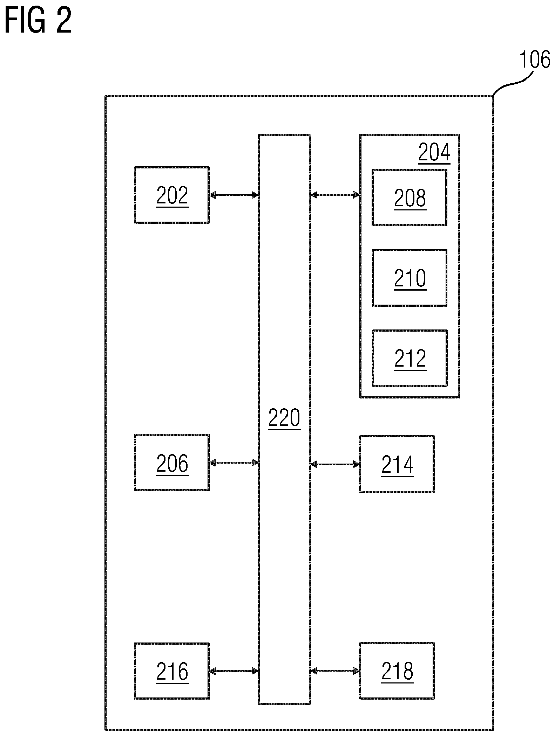

FIG. 2 illustrates a block diagram of an apparatus 106 for generating recommendations for optimizing a process, according to one embodiment of the present invention. The apparatus 106 may include a processing unit 202, one or more memory 204, a database 206, a network interface 214, an input unit 216, and an output unit 218. The apparatus 106 may further include one or more buses that functionally couple various components of the apparatus 106.

The memory 204 may include volatile memory (memory that maintains its state when supplied with power) such as random access memory (RAM) and/or non-volatile memory (memory that maintains its state even when not supplied with power) such as read-only memory (ROM), flash memory, ferroelectric RAM (FRAM), and so forth. Persistent data storage, as that term is used herein, may include non-volatile memory. In certain example embodiments, volatile memory may enable faster read/write access than non-volatile memory. However, in certain other example embodiments, certain types of non-volatile memory (e.g., FRAM) may enable faster read/write access than certain types of volatile memory. In certain example, the database 206 may be equivalent to the memory. In various implementations, the memory may include multiple different types of memory such as various types of static random access memory (SRAM), various types of dynamic random access memory (DRAM), various types of unalterable ROM, and/or writeable variants of ROM such as electrically erasable programmable read-only memory (EEPROM), flash memory, and so forth. The memory may include main memory as well as various forms of cache memory such as instruction cache(s), data cache(s), translation lookaside buffer(s) (TLBs), and so forth. Further, cache memory such as a data cache may be a multi-level cache organized as a hierarchy of one or more cache levels (LI, L2, etc.).

The memory 204 may include a module stored in the form of machine-readable instructions executable by the one or more processing units 202. The memory may include multiple modules such as preprocessing module 208, forecasting model 210, and optimization module 212. The multiple modules interact with each other to generate recommendations for optimizing a process.

The database 206 may include removable storage and/or non-removable storage including, but not limited to, magnetic storage, optical disk storage, and/or tape storage. The database 206 may provide non-volatile storage of computer-executable instructions and other data.

The database 206 may store computer-executable code, instructions, or the like that may be loadable into the memory and executable by the processing unit 202 to cause the processing unit 202 to perform or initiate various operations such as the operations required for generating recommendations for optimizing a process. The database 206 may store historical data of operational parameters comprising control variables and critical parameters associated with the process in the form of tables or structured knowledge graphs and that may be copied to memory for use by the processing unit 202 during the execution of the computer-executable instructions. Moreover, output data generated as a result of execution of the computer-executable instructions by the processing unit 202 may be stored initially in memory and may ultimately be copied to the database 206 for non-volatile storage.

More specifically, the database 206 is configured to access the memory; and one or more program module, applications, engines, managers, computer-executable code, scripts, or the like such as, for example, the various modules of the memory such as preprocessing module 208, forecasting model 210, and optimization module 212. Any of the components depicted as being stored in the database 206 may include any combination of software, firmware, and/or hardware. The software and/or firmware may include computer-executable instructions (e.g., computer-executable program code) that may be loaded into the memory for execution by one or more of the processing units 202 to perform any of the corresponding operations described earlier.

The processing unit 202 may be configured to access the memory and execute computer-executable instructions loaded therein. For example, the processing unit 202 may be configured to execute computer-executable instructions of the various program module, applications, engines, managers, or the like of the preprocessing module 208, forecasting model 210, and optimization module 212 to cause or facilitate various operations to be performed in accordance with one or more embodiments of the disclosure. The processing unit 202 may include any suitable processing unit 202 capable of accepting data as input, processing the input data in accordance with stored computer-executable instructions, and generating output data. The processing unit 202 may include any type of suitable processing unit 202 including, but not limited to, a central processing unit 202, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System -on-a-Chip (SoC), a digital signal processor (DSP), and so forth. Further, the processing unit 202 may have any suitable microarchitecture design that includes any number of constituent components such as, for example, registers, multiplexers, arithmetic logic units, cache controllers for controlling read/write operations to cache memory, branch predictors, or the like. The microarchitecture design of the processing unit 202 may be capable of supporting any of a variety of instruction sets.

The processing unit 202, using the preprocessing module 208, preprocesses or cleanses the historical data of operational parameters of the process. Pre-processing of data is a critical step aimed at enhancing the quality and reliability of the input historical data before further analysis. This step involves a series of operations including data cleaning, normalization, transformation, and imputation of missing values. Outliers are detected and treated to ensure consistency across the historical data. Redundant and irrelevant data are systematically removed to reduce noise and improve the reliability of the historical data.

The processing unit 202, using the forecasting model 210, selects the forecasting model 210 for each of the critical parameter of the process. The sensitivity of each of the forecasting model 210 is determined for each of the critical parameter and the forecasting model 210 with better sensitivity is selected for forecasting critical parameters.

The processing unit 202, using the optimization module 212, determines the optimum control variables for optimizing the critical parameters thereby optimizing the process. In one embodiment, the optimization module 212 uses Bayesian optimization to determine the optimum values of the control variables.

The input unit 216 and the output unit 218 may facilitate the receipt of input information by the various modules from one or more I/O devices as well as the output of information from the modules to the one or more I/O devices. The I/O devices may include any of a variety of components such as a display or a display screen having a touch surface or a touchscreen; an audio output device for producing sound, such as a speaker; an audio capture device, such as a microphone; an image and/or video capture device, such as a camera; a haptic unit; and so forth. The I/O devices may further include, for example, any number of peripheral devices such as data storage devices, printing devices, and so forth.

The network interface 214 may include communication links and associated networking devices (e.g., link-layer switches, routers, etc.) for transmitting network traffic over any suitable type of medium including, but not limited to, coaxial cable, twisted-pair wire (e.g., twisted-pair copper wire), optical fiber, a hybrid fiber-coaxial (HFC) medium, a microwave medium, a radio frequency communication medium, a satellite communication medium, or any combination thereof.

The bus 220 may include at least one of a system bus, a memory bus, an address bus, or a message bus, and may permit the exchange of information (e.g., data (including computer-executable code), signaling, etc.) between various components of the apparatus 106. The bus may include, without limitation, a memory bus or a memory controller, a peripheral bus, an accelerated graphics port, and so forth.

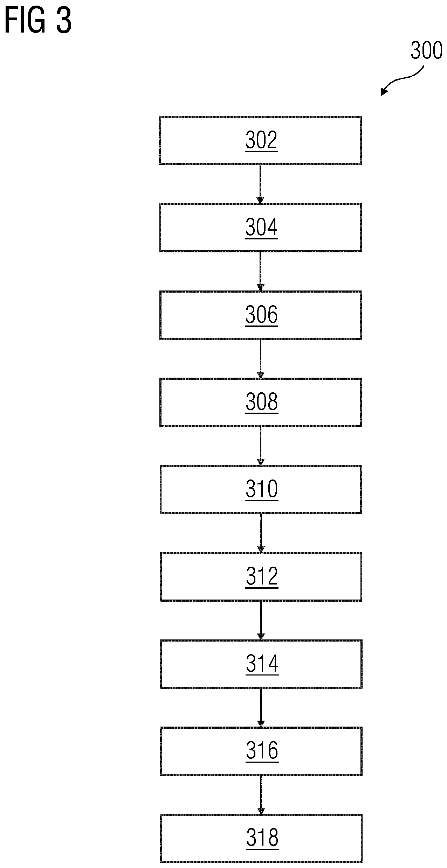

FIG. 3 is a flowchart of a method for generating recommendations for optimizing a process in process industry, according to an embodiment of the present invention. At step 302, the historical data of operational parameters is acquired by the processing unit 202. The acquired historical data is further stored in the database 206 for further use. Additionally, the acquired historical data may be pre-processed using the pre-processing module to remove the outliers in the dataset thereby improving the reliability of historical data.

At step 304, a forecasting model 210 is selected among a plurality of forecasting model 210 for forecasting critical parameters of the process. Therefore, each of the critical parameters may be forecasted using a different forecasting model 210 based on the sensitivity of the forecasting model 210 for forecasting a critical parameter.

In one embodiment, the forecasting model 210 is selected from the group of hybrid neural networks, autoregressive models, ARIMA, and NARMAX.

At step 306, the critical parameters of the process are forecasted using the selected forecasting model 210. The forecasting model 210 utilizes the historical data of operational parameters associated with the process to forecast the critical parameters of the process. Thus, for the present state of the process and control variables, the forecasting model 210 predicts the future values of the critical parameters.

At step 308, an objective function is defined for each of the critical parameters of the process. The objective function is an expression for maximizing or minimizing the critical parameter of the process. The objective function is defined using the forecasted values of the critical parameters, a maximum threshold and a minimum threshold of the critical parameter.

As an example, for a critical parameter, Ŷ is a list of its forecasted values at various timestamps in the future and ŷ is the latest forecasted value. Further, *lcl* and *ucl* are the minimum threshold and maximum threshold of the critical parameter respectively, i.e., for the kiln to have efficient output the critical parameter must remain within these thresholds. The objective function for each parameter is defined as follows: $obj = - \left(\left(max\left(\left(\hat{y}-ucl\right), 0\right)+max\left(lcl-\hat{y}, 0\right)\right)+0.1*std\left(\hat{Y}\right)\right)$ std refers to "standard deviation"

The objective function comprises a loss function for standard deviation of the forecasted critical parameters. The standard deviation loss function ensures that the fluctuation in the forecasted critical parameters is evened out.

The maximum and minimum threshold limits are predefined the user 112 to ensure that the critical parameters are within the threshold limits. In an embodiment, the maximum and minimum threshold for the critical parameters is determined by the processing unit 202 using the historical data of operational parameters of the process.

At step 310, an optimization function is defined for optimizing the process, wherein the optimization function is defined using objective functions of the critical parameters of the process and weights assigned to each of the objective functions.

The overall optimization function is represented using the following expression: $opt_func = \sum - \left({W}_{i}^{∗}\left(\left(max\left(\left({\hat{y}}_{i}-ucl\right), 0\right)+max\left(lcl-{\hat{y}}_{i}, 0\right)\right)+0.1*std\left({\hat{Y}}_{i}\right)\right)\right)$ Wᵢ represents weight assigned to the critical parameter

At step 312, the critical parameters of the process are optimized using an optimization module 212. Bayesian optimization is applied to the optimization function to optimize the critical parameter to be within the predefined maximum and minimum threshold limits. In an embodiment, the optimization module 212 optimizes the process between the current timestamp (t-0) to the future timestamp (t+5).

At step 314, the processing unit 202 determines optimum control variables to be set at a future timestamp for optimizing the critical parameters of the process to be within the maximum and minimum threshold. Further, boundaries for the control variables may be provided to ensure that the optimum control variables are within the boundaries of the control variables.

At step 316, the optimum control variables to be set at a future timestamp to optimize the process are recommended by the processing unit 202. The processing unit 202 may validate that the determined optimum control variables are within the boundaries of the control variables.

At step 318, the optimum control variables of the process based on the recommendations of the processing unit 202 are set using a controller. Thus, the process is optimized by altering the control variables to optimum values to improve the efficiency of the process.

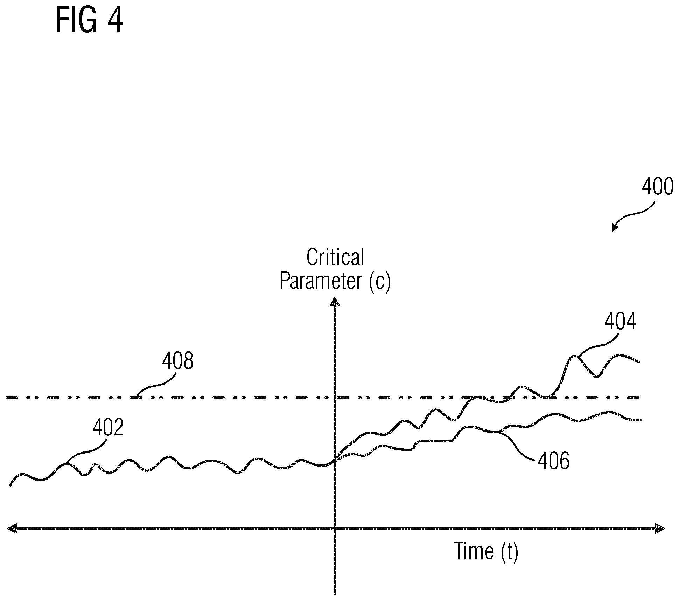

FIG. 4 is a graphical representation of optimization of a critical parameter, according to an embodiment of the present invention. The graph 402 indicates the historical data of the critical parameter of the process till the current timestamp. The line 408 indicates the threshold value for the critical parameter, wherein the critical parameter must be within maximum threshold for the process to be efficient. The graph 404 represents a conventional system 100 where the critical parameter is not optimized. As it is seen, in graph 404, as time progresses, the critical parameter exceeds the maximum threshold value thereby affecting the efficiency of the process.

On the other hand, graph 406 represents the optimization of the critical parameter of the process, wherein the critical parameters are within the maximum threshold value. The processing unit 202 recommends optimum control variables to be set at a future timestamp so that the critical parameter is within the maximum threshold limit. Thus, the present invention recommends the optimum control variables to be set to optimize the process.

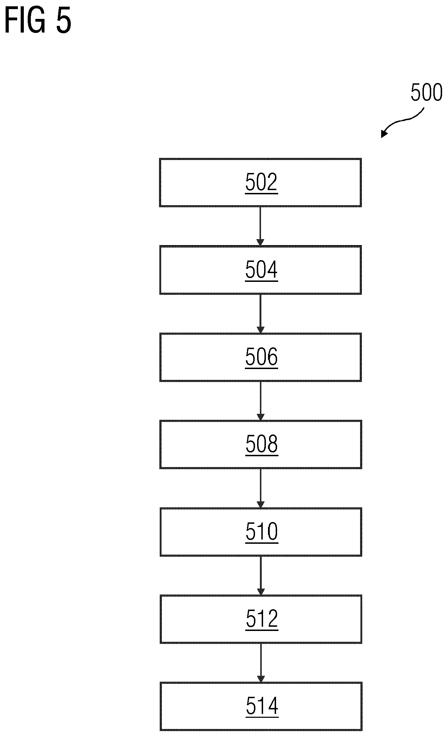

FIG. 5 is a flowchart a method for selecting a forecasting model 210, according to an embodiment of the present invention. At step 502, the processing unit 202 identifies the timestamps in the historical data in which the user 112 has performed an action of changing the control variables of the process. As an example, if at a particular timestamp the human operator has changed the flow rate of air, the processing unit 202 identifies the timestamp and the change that is made to the control variable.

At step 504, the critical parameters are forecasted using a forecasting model 210 selected from a plurality of forecasting model 210. The critical parameters are forecasted without replicating the change in control variable made by the user 112 in the historical data. In other words, the change in control variable such as temperature, pressure is not replicated, and the critical parameters are forecasted by the forecasting model 210.

At step 508, the same forecasting model 210 is used to forecast critical parameters upon replicating the change in control variable made by the user 112 in the historical data. In other words, if the user 112 had changed a control variable such as temperature, pressure in the historical data, the forecasting model 210 mimics the change and forecasts the control variables.

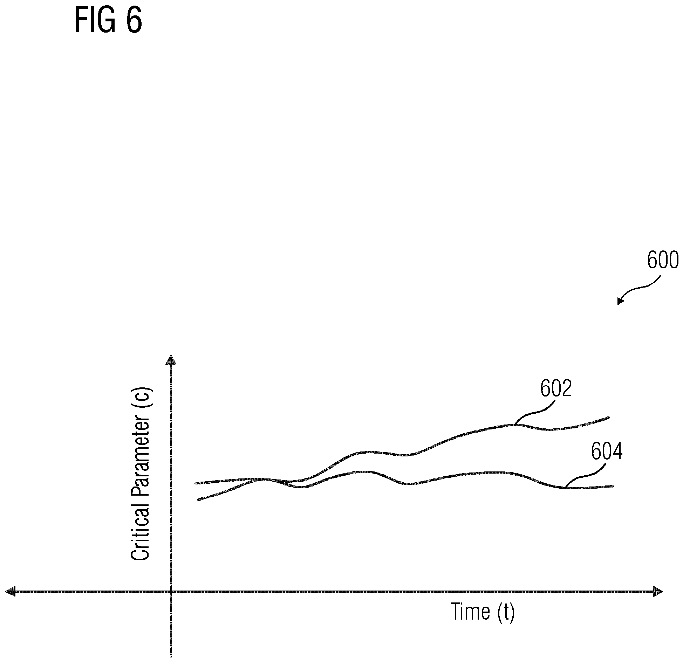

FIG. 6 is a graphical representation of forecasting critical parameters by forecasting model 210, according to an embodiment of the present invention. The graph 602 represents the forecasted critical parameter without replicating the change made to the control variable in the historical data. The graph 604 the forecasted critical parameter upon replicating the change made to the control variable in the historical data.

At step 510, the processing unit 202 validates whether the forecasted critical parameters of the process without replicating the change in the control variables and upon replicating the change in the control variables are different. If the forecasted critical parameters without replicating the change and upon replicating the change are not different, then at step 504, the processing unit 202 selects another forecasting model 210 to forecast the critical parameter.

If the forecasted critical parameters without replicating the change and upon replicating the change are different, then at step 512, the processing unit 202 determines whether the forecasted critical parameters of the process upon replicating the change in the control variables made by the user 112 is in-line with real-time values.

If the forecasted critical parameter upon replicating the change is not in-line with the real-time critical parameter, then at step 504, the processing unit 202 selects another forecasting model 210 to forecast the critical parameter.

If the forecasted critical parameter upon replicating the change is in-line with the real-time critical parameter, then at step 514, the processing unit 202 selects forecasting model 210 to forecast the critical parameter and recommends the optimum control variables by optimizing the process.

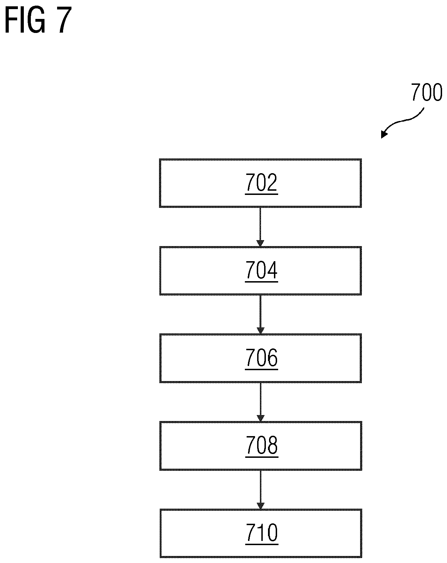

FIG. 7 is a flowchart of a method for generating recommendations for optimizing a process in process industry, according to an embodiment of the present invention. The method provides a walk-forward approach for generating recommendations for optimizing the process. At step 702, change in control variables at a future timestamp is provided as an input to the forecasting model 210 at the current timestamp. For example, if a control variable such as air flow rate is to be altered after 5 minutes from the current timestamp, then this change is provided as an input to the forecasting model 210.

At step 704, the critical parameters of the process for the change in control variables at the future timestamp are forecasted using the forecasting model 210. Thus, the change in critical parameters due to a future change in control variables are forecasted thereby providing a dynamic technique for generating recommendations based on future changes to the process.

At step 706, the critical parameters of the process are optimized by applying Bayesian optimization to the optimization function based on the forecasted critical parameters. The optimization is performed in a manner that the critical parameters are within the predefined maximum and minimum threshold limits.

At step 708, the processing unit 202 determines optimum control variables to be set at a future timestamp for optimizing the critical parameters of the process. The processing unit 202 ensures that the optimum control variables are within the predefined boundaries.

At step 710, the optimum control variables to be set at a future timestamp to optimize the process are recommended to the user 112 by the processing unit 202. Further, the optimum control variables are set using a controller to optimize the process.

The disclosed system and method enable optimizing the process in a cement kiln thereby improving the quality of the cement clinker obtained. The disclosed method forecasts the critical parameters and optimizes the critical parameter such that the critical parameters are within the predefined thresholds. Further, the method determined the optimum control variables to be set in the cement kiln for maintaining the critical parameters within the predefined threshold limits.

While the invention has been illustrated and described in detail with the help of a preferred embodiment, the invention is not limited to the disclosed examples. Other variations can be deducted by those skilled in the art without leaving the scope of protection of the claimed invention.

### List of references

100 - system for optimizing a process by automatically changing control variables in a cement kiln
102 - Cement kiln
104a-104n - Plurality of sensors
106 - Apparatus for optimizing a process by automatically changing control variables
108 - Controller
110 - Communication network
112 - User
202 - Processing unit
204 - Memory
206 - Database
208 - Preprocessing module
210 - Forecasting model
212 - Optimization module
214 - network interface
216 - input unit
218 - output unit
220 - Bus
300 - flowchart of a method for generating recommendations for optimizing a process in process industry
400 - graphical representation of optimization of a critical parameter
500 - flowchart a method for selecting a forecasting model
600 - graphical representation of forecasting critical parameters by forecasting model
700 - flowchart of a method for generating recommendations for optimizing a process in process industry

## Claims

1. A method for generating recommendations for optimizing a process, wherein the method comprises:
acquiring, by a processing unit (202), historical data of operational parameters comprising control variables and critical parameters associated with the process for storing in a database (206);
selecting, by the processing unit (202), a forecasting model (210) for forecasting critical parameters of the process;
forecasting, using the forecasting model (210), critical parameters of the process by processing historical data of operational parameters associated with the process;
defining, by the processing unit (202), an objective function for each of the critical parameters of the process, wherein the objective function is defined using forecasted values of the critical parameter, a maximum threshold and a minimum threshold of the critical parameter;
defining, by the processing unit (202), an optimization function for optimizing the process, wherein the optimization function is defined using objective functions of the critical parameters of the process and weights assigned to each of the objective functions;
optimizing, by the processing unit (202) using an optimization module (212), the critical parameters of the process by applying Bayesian optimization to the optimization function, such that the forecasted critical parameters are within the defined maximum threshold and minimum threshold;
determining, by the processing unit (202), the optimum control variables to be set at a future timestamp for optimizing the critical parameters of the process to be within the maximum and minimum threshold;
recommending, by the processing unit (202), the optimum control variables to be set at a future timestamp to optimize the process; and
setting the optimum control variables of the process based on the recommendations of the processing unit (202) to optimize the process.

2. The method according to claim 1, wherein selecting a forecasting model (210) comprises:
identifying timestamps in the historical data in which the user has performed an action of changing the control variables of the process;
forecasting, by the forecasting model (210), the critical parameters of the process before replicating the change in control variables made by the user;
forecasting, by the forecasting model (210), the critical parameters of the process after replicating the change in control variables made by the user;
comparing the forecasted critical parameters of the process before replicating the change in the control variables and after replicating the change in the control variables;
selecting the forecasting model (210) for forecasting critical parameters if:
a difference is observed between the forecasted critical parameters of the process before replicating the change in the control variables and after replicating the change in the control variables; and
the forecasted critical parameters of the process after replicating the change in the control variables made by the user is in-line with real-time values of the critical parameters of the processes.

3. The method according to any of the preceding claims, wherein the method comprises:
providing a change in control variables at a future timestamp as an input at the current timestamp to the forecasting model (210);
forecasting, by the forecasting model (210), the critical parameters of the process for the change in control variables at the future timestamp; and
optimizing, by the processing unit (202), the critical parameters of the process by applying Bayesian optimization to the optimization function based on the forecasted critical parameters; and
determining, by the processing unit (202), optimum control variables to be set at a future timestamp for optimizing the critical parameters of the process within the maximum and minimum threshold; and
recommending, by the processing unit (202), to the user, the optimum control variables to be set at a future timestamp to optimize the process;

4. The method according to any of the preceding claims, wherein the method comprises:
providing boundaries to the control variables of the process as an input to the optimization module (212); and
validating that the recommended optimum control variables are within the defined boundaries of the control variables.

5. The method according to any of the preceding claims, wherein the forecasting model (210) is selected from the group of hybrid neural networks, autoregressive models, ARIMA, and NARMAX.

6. The method according to any of the preceding claims, wherein the maximum and minimum threshold for the critical parameters is determined by the processing unit (202) using the historical data of operational parameters of the process.

7. The method according to any of the preceding claims, wherein the objective functions of the critical parameters comprise a loss function for standard deviation of the forecasted critical parameters.

8. An apparatus configured for generating recommendations for optimizing a process, the apparatus comprising:
one or more processing units (202); and
a memory (204) communicatively coupled to the one or more processing units (202), the memory (204) comprises a module stored in the form of machine-readable instructions executable by the one or more processing units (202), wherein the module is configured to perform the method steps according to claims 1 to 7.

9. A system (100) for generating recommendations for optimizing a process in a cement kiln (102), the system (100) comprises:
a plurality of sensors (104) configured to measure real-time operational parameters comprising control variables and critical parameters of the process in the cement kiln, wherein:
the control variables include pressure, temperature, raw material flow rate, or fuel flow rate; and
the critical parameters include sintering zone temperature;
an apparatus (106) for generating recommendations for optimizing the process in cement kiln as claimed in claim 8, wherein the apparatus (106) is configured to:
receive the historical data of operational parameters of the cement kiln;
optimize the critical parameters of the cement kiln using Bayesian optimization to determine the optimum control variables of the kiln; and
recommend the determined optimum control variables to be set a future timestamp for optimizing the process; and
a controller (108) configured to set the optimum control variables at a future timestamp based on the recommendations of the apparatus (106) to optimize the process in the cement kiln.

10. A computer-program product, having computer-readable instructions stored therein, that when executed by a processing unit (202), cause the processing unit (202) to perform method steps according to any of the claims 1 to 7.

11. A computer readable medium on which program code sections of a computer program are saved, the program code sections being loadable into and/or executable in a system to make the system execute the method steps according to any of the claims 1 to 7 when the program code sections are executed in the system.
